# EUROPEAN PATENT APPLICATION

(11) **EP 4 691 670 A1**
(43) Date of publication of application: **11.02.2026**
(21) Application number: 25190266.4
(22) Date of filing: 17.07.2025
(51) Int. Cl.: B22F 12/90, B22F 10/28, B33Y 30/00

(54) **THREE DIMENSIONAL POWDER BED FUSION ADDITIVE MANUFACTURING APPARATUS**

(30) Priority: 19.07.2024 JP 2024116228
(71) Applicant: Jeol Ltd., Akishima, Tokyo 196-8558 (JP)
(72) Inventor: TSUDA, Takashi, Tokyo 196-8558 (JP); TSUTAGAWA, Nari, Tokyo 196-8558 (JP); KANEKO, Yuhei, Tokyo 196-8558 (JP); KAWAKAMI, Masahiko, Tokyo 196-8558 (JP)
(74) Representative: Boult Wade Tennant LLP

(57) **Abstract**

A three-dimensional powder bed fusion additive manufacturing (PBF-AM) apparatus (10, 10B) includes a build plate (22), a powder supply device (16), an irradiation device (14), a detection unit (40, 80), and a shielding member (30, 91). The powder supply device (16) supplies a powder material (32) to the build plate (22) to form a powder layer. The irradiation device (14) irradiates the powder layer with a primary ray (15). The detection unit (40, 80) detects backscattered electrons (61) generated when the powder material (32) is irradiated with the primary ray (15). The shielding member (30, 91) openably and closably covers a detection surface of the detection unit (40, 80).

## Description

### BACKGROUND

### Technical Field

The present invention relates to a three-dimensional powder bed fusion additive manufacturing (PBF-AM) apparatus that manufactures a product by stacking layers in which a powder material is thinly spread on a stage one by one.

### Related Art

In recent years, a three-dimensional PBF-AM technology that manufactures a product by stacking layers in which a powder material is thinly spread one by one has attracted attention, and many types of three-dimensional PBF-AM technologies have been developed depending on different powder materials and different manufacturing methods.

In a manufacturing method using a conventional three-dimensional PBF-AM apparatus, for example, a powder material is spread layer by layer on a base plate installed on the upper surface of a stage. Next, in the powder material spread on the base plate, only the two-dimensional structural portion corresponding to one cross-section of a product is melted by a heating mechanism composed of an electron beam or a laser. Layers of the powder material are then stacked one by one in a height direction (a Z-direction), so that the product is manufactured (see, for example, Patent Literature 1). Furthermore, the technique in Patent Literature 1 describes providing a detection unit for observing the build surface of the product.

### Citation List

### Patent Literature

Patent Literature 1: JP 2022-138653 A

### SUMMARY

However, in the conventional three-dimensional PBF-AM apparatus, there is a possibility that the powder material scattered to the detection unit and the members around the detection unit, and the evaporated substance generated from the build surface adhere to the detection unit and the members around the detection **unit.** Furthermore, the conventional three-dimensional PBF-AM apparatus has a problem that the detection unit increases in temperature due to thermal radiation generated at the time of manufacturing the product. As a result, the conventional three-dimensional PBF-AM apparatus has a problem that the detection unit cannot perform an accurate detection operation.

In view of the above problems, an object of the present invention is to provide a three-dimensional PBF-AM apparatus capable of preventing a powder material scattered to a detection unit and an evaporated substance generated from a build surface from adhering to the detection unit.

In order to solve the above problem and achieve an object of the present invention, a three-dimensional powder bed fusion additive manufacturing (PBF-AM) apparatus according to the present invention includes a build plate, a powder supply device, an irradiation device, a detection unit, and a shielding member. The powder supply device supplies a powder material to the build plate to form a powder layer. The irradiation device irradiates the powder layer with a primary ray. The detection unit detects backscattered electrons generated when the powder material is irradiated with the primary ray. The shielding member openably and closably covers a detection surface of the detection unit.

According to the three-dimensional PBF-AM apparatus, it is possible to prevent the powder material scattered to the detection unit and the evaporated substance generated from the build surface from adhering to the detection unit.

### BRIEF DESCRIPTION OF DRAWINGS

FIG. 1 is a schematic cross-sectional view schematically illustrating a three-dimensional PBF-AM apparatus according to a first embodiment example of the present invention;
FIG. 2 is a plan view illustrating a position of a detection unit in the three-dimensional PBF-AM apparatus according to the first embodiment example of the present invention;
FIG. 3 is a plan view illustrating the detection unit and a support bracket in the three-dimensional PBF-AM apparatus according to the first embodiment example of the present invention;
FIG. 4 is a front view illustrating an electron shield and an elevating mechanism in the three-dimensional PBF-AM apparatus according to the first embodiment example of the present invention;
FIGS. 5A to 5C are explanatory diagrams illustrating an elevating operation of the electron shield and a detection operation of the detection unit in the three-dimensional PBF-AM apparatus according to the first embodiment example of the present invention;
FIG. 6 is an enlarged plan view illustrating an area A illustrated in FIG. 3;
FIG. 7 is a cross-sectional view of FIG. 6 taken along a vertical direction;
FIG. 8 is a flowchart illustrating an operation procedure of the three-dimensional PBF-AM apparatus according to the first embodiment example of the present invention;
FIG. 9 is a schematic cross-sectional view schematically illustrating a three-dimensional PBF-AM apparatus according to a second embodiment example of the present invention;
FIG. 10 is a plan view illustrating a detection unit and a shielding member in the three-dimensional PBF-AM apparatus according to the second embodiment example of the present invention; and
FIG. 11 is a diagram illustrating a state where the detection unit in the three-dimensional PBF-AM apparatus according to the second embodiment example of the present invention is opened.

### DETAILED DESCRIPTION

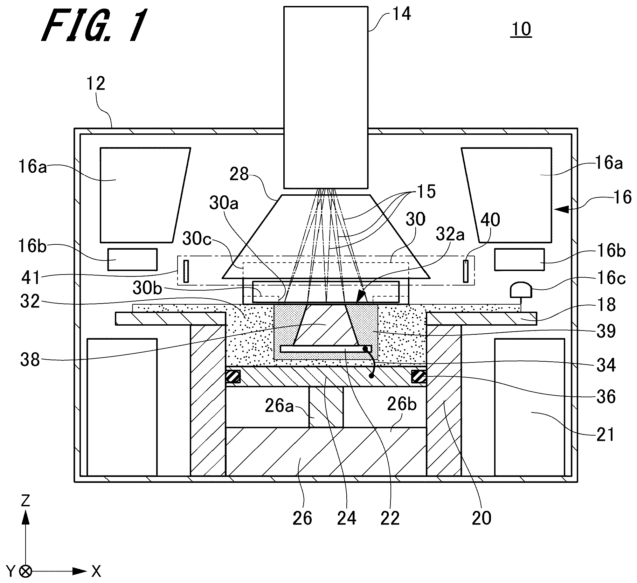

Hereinafter, embodiment examples of a three-dimensional PBF-AM apparatus according to the present invention will be described with reference to FIGS. 1 to 11. The same reference numerals are given to members common to the respective drawings.

### 1. First Embodiment Example

### 1-1. Configuration of Three-Dimensional PBF-AM Apparatus

First, a first embodiment example of a three-dimensional PBF-AM apparatus according to an embodiment example of the present invention (hereinafter, referred to as "the present example") will be described with reference to FIG. 1.

FIG. 1 is a schematic cross-sectional view schematically illustrating the three-dimensional PBF-AM apparatus of the present example. In the following description, in order to clarify the shape, positional relationship, and the like of each part of the three-dimensional PBF-AM apparatus, the horizontal direction in FIG. 1 is referred to as an X direction, the depth direction in FIG. 1 is referred to as a Y direction, and the vertical direction in FIG. 1 is referred to as a Z direction. The X direction, the Y direction, and the Z direction are directions orthogonal to each other. The X direction and the Y direction are parallel to the horizontal direction, and the Z direction is parallel to the vertical direction.

A three-dimensional PBF-AM apparatus 10 illustrated in FIG. 1 is, for example, an apparatus that irradiates a powder material made of metal powder such as titanium with an electron beam to melt the powder material and stacks layers in which the powder material is solidified, thereby manufacturing a three-dimensional product.

As illustrated in FIG. 1, the three-dimensional PBF-AM apparatus 10 includes a vacuum chamber 12, a beam irradiation device 14, a powder supply device 16, a build table 18, a build box 20, and a collecting box 21. The three-dimensional PBF-AM apparatus 10 also includes a build plate 22, an inner base 24, a plate moving device 26, a radiation shield cover 28, and an electron shield 30 indicating an example of a shielding member. Furthermore, the three-dimensional PBF-AM apparatus 10 includes a plurality of detection units 40 that detect backscattered electrons and a support bracket 41 that supports the detection units 40.

The vacuum chamber 12 is a chamber for creating a vacuum state by evacuating air in the chamber using a vacuum pump (not illustrated). The vacuum chamber 12 houses the powder supply device 16, the build table 18, the build box 20, the collecting box 21, the build plate 22, the inner base 24, the plate moving device 26, the radiation shield cover 28, the electron shield 30, the detection unit 40, and the support bracket 41.

The beam irradiation device 14 is a device that irradiates the build plate 22 or a build surface 32a of a powder layer made of a powder material 32 with electron beams 15. The build surface 32a corresponds to the upper surface of the powder layer. The state of the powder layer changes as the three-dimensional PBF-AM process proceeds. Although not illustrated, the beam irradiation device 14 includes an electron gun that is the generation source of the electron beam 15, a focusing lens that focuses the electron beams generated by the electron gun, and a deflection lens that deflects the electron beams 15 focused by the focusing lens. The focusing lens is configured using a focusing coil, and focuses the electron beams 15 by a magnetic field generated by the focusing coil. The deflection lens is configured using a deflection coil, and deflects the electron beams 15 by a magnetic field generated by the deflection coil.

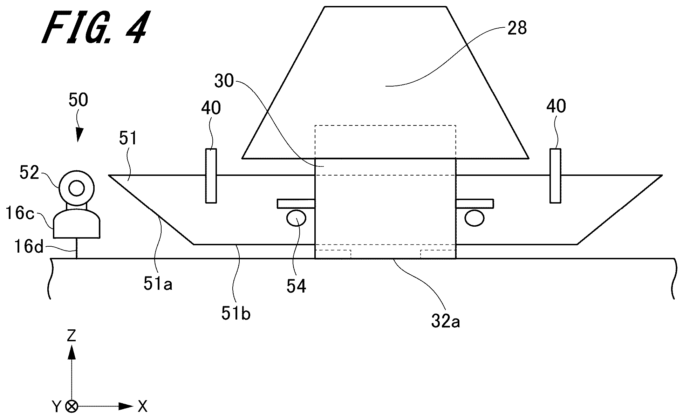

The powder supply device 16 is a device that supplies the powder material 32, which is an example of the powder material as the raw material of a product 38, onto the build plate 22 to form a powder layer. The powder supply device 16 includes a hopper 16a, a powder dropping device 16b, and a recoater 16c. The hopper 16a is a chamber for storing metal powder. The powder dropping device 16b is a device that drops the powder material 32 stored in the hopper 16a onto the build table 18. The recoater 16c is an elongated member long in the Y direction, and includes a blade 16d for spreading powder (see FIG. 4). The recoater spreads the powder material 32 dropped by the powder dropping device 16b on the build table 18.

The recoater 16c is supported to be movable in the X direction by a moving mechanism (not illustrated). By the recoater 16c moving in the X direction, which is a direction parallel to one surface of the build plate 22, the powder material 32 is spread over the entire surface of the build table 18.

The build table 18 is horizontally disposed inside the vacuum chamber 12. The build table 18 is disposed below the powder supply device 16. The central portion of the build table 18 is opened. The opening shape of the build table 18 is a circle in plan view or a square in plan view (for example, a quadrangle in plan view).

The build box 20 is a box that forms a building space. The upper end portion of the build box 20 is connected to the opening edge of the build table 18. The lower end portion of the build box 20 is connected to the bottom wall of the vacuum chamber 12.

The collecting box 21 is a box that collects the powder material 32 supplied more than necessary among the powder material 32 supplied onto the build table 18 by the powder supply device 16.

The build plate 22 is a plate for forming the product 38 using the powder material 32. The product 38 is formed by being stacked on the build plate 22. The build plate 22 is formed in a circular shape in plan view or a square shape in plan view based on the opening shape of the build table 18. The build plate 22 is connected (grounded) to the inner base 24 by a ground wire 34 so as not to be in an electrically floating state. The inner base 24 is maintained at a ground (GND) potential. The powder material 32 is spread on the build plate 22 and the inner base 24.

The inner base 24 is provided to be movable in the vertical direction (Z direction). The build plate 22 moves in the vertical direction integrally with the inner base 24. The inner base 24 has a larger outer dimension than the build plate 22. The inner base 24 slides in the vertical direction along the inner side surface of the build box 20. A seal member 36 is attached to the outer peripheral portion of the inner base 24. The seal member 36 is a member that maintains slidability and sealability between the outer peripheral portion of the inner base 24 and the inner side surface of the build box 20. The seal member 36 is made of a material having heat resistance and elasticity.

The plate moving device 26 is a device that moves the build plate 22 and the inner base 24 in the vertical direction. The plate moving device 26 includes a shaft 26a and a drive mechanism unit 26b. The shaft 26a is connected to the lower surface of the inner base 24. The drive mechanism unit 26b includes a motor and a power transmission mechanism (both not illustrated), and drives the power transmission mechanism using the motor as a drive source to move the build plate 22 and the inner base 24 integrally with the shaft 26a in the vertical direction. The power transmission mechanism includes, for example, a rack and pinion mechanism, a ball screw mechanism, or the like.

The radiation shield cover 28 is disposed between the build plate 22 and the beam irradiation device 14 in the Z direction. The radiation shield cover 28 is made of metal such as stainless steel. The radiation shield cover 28 shields radiant heat generated when the powder material 32 is irradiated with the electron beam 15 by the beam irradiation device 14. When the powder material 32 is irradiated with the electron beam 15 in order to perform sintering of the powder material 32, the powder material 32 is melted. At this time, when heat radiated from the build surface 32a of the powder layer, that is, radiant heat is widely diffused into the vacuum chamber 12, thermal efficiency is degraded. On the other hand, in a case where the radiation shield cover 28 is disposed above the build plate 22, heat radiated from the build surface 32a is shielded by the radiation shield cover 28, and the shielded heat is reflected by the radiation shield cover 28 and returned to the build plate 22 side. Therefore, heat generated by the irradiation of the electron beam 15 can be efficiently used.

In addition, the radiation shield cover 28 performs a function of suppressing adhesion (vapor deposition) of an evaporated substance generated when the powder material 32 is irradiated with the electron beam 15 to the inner wall of the vacuum chamber 12. When the powder material 32 is irradiated with the electron beam 15, a part of the melted metal becomes an atomized evaporated substance and rises from the build surface 32a. The radiation shield cover 28 is disposed so as to cover the space above the build surface 32a so that the evaporated substance does not diffuse into the vacuum chamber 12.

The electron shield 30 has an opening 30a and a shield portion 30b. In forming the product 38, the electron shield 30 is disposed to cover the upper surface of the powder material 32, that is, the build surface 32a. At this time, the opening 30a exposes the powder material 32 spread on the build plate 22, and the shield portion 30b shields the powder material 32 located outside the opening 30a. The shape of the opening 30a is set based on the shape of the build plate 22. For example, when the build plate 22 is circular in plan view, the shape in plan view of the opening 30a is set to be circular accordingly, and when the build plate 22 is square in plan view, the shape in plan view of the opening 30a is set to be square accordingly.

The electron shield 30 is disposed below the radiation shield cover 28. The opening 30a and the shield portion 30b of the electron shield 30 are arranged between the build plate 22 and the radiation shield cover 28 in the Z direction. The electron shield 30 includes an enclosure portion 30c that surrounds the periphery of the build surface 32a of the product 38. The enclosure portion 30c is disposed so as to surround the space above the opening 30a. A part (upper portion) of the enclosure portion 30c overlaps the radiation shield cover 28 in the Z direction. The enclosure portion 30c performs a function of shielding radiant heat generated from the build surface 32a and a function of suppressing diffusion of an evaporated substance generated from the build surface 32a. That is, the enclosure portion 30c performs similar functions to the radiation shield cover 28.

An inner flange portion protruding toward the enclosure portion 30c of the electron shield 30 is formed on the inner wall surface of the radiation shield cover 28. This inner flange portion can reduce a gap between the inner wall surface of the radiation shield cover 28 and the enclosure portion 30c of the electron shield 30.

As a result, the scattered powder material 32 and the evaporated substance generated from the build surface 32a can be prevented from leaking from above the electron shield 30 to the outside of the radiation shield cover 28.

The electron shield 30 is made of metal having a melting point higher than that of the powder material 32 used as the raw material of the product 38. The electron shield 30 is made of a material having low reactivity with the powder material 32. Examples of a constituent material of the electron shield 30 include titanium. In addition, the electron shield 30 may be made of metal of the same material as the powder material 32 to be used. The electron shield 30 is electrically grounded to GND. The electron shield 30 performs an electrical shielding function in a case where the powder material 32 is presintered by irradiation with the electron beam 15 in a preheating step before the sintering step to be described later, thereby minimizing the occurrence of powder scattering.

The electron shield 30 is supported so as to be able to be raised and lowered in the Z direction, which is the vertical direction, by an elevating mechanism 50 (see FIG. 4). The configuration of the elevating mechanism 50 and the elevating operation of the electron shield 30 will be described later.

A plurality of the detection units 40 that detect backscattered electrons are arranged outside the enclosure portion 30c of the electron shield 30. The plurality of detection units 40 are supported by the support bracket 41. The support bracket 41 is disposed at the lower end portion of the radiation shield cover 28 in the Z direction. Furthermore, the support bracket 41 is disposed outside the lower end portion of the radiation shield cover 28 in the X direction and the Y direction, that is, the horizontal direction. Therefore, the plurality of detection units 40 are arranged between the radiation shield cover 28 and the build surface 32a of the product 38 formed on the build plate 22. The support bracket 41 and the detection unit 40 supported by the support bracket 41 are arranged above the recoater 16c in the Z direction. As a result, when the recoater 16c moves in the X direction, interference between the recoater 16c and the support bracket 41 can be prevented. The support bracket 41 is fixed to the vacuum chamber 12. Detailed configurations of the detection unit 40 and the support bracket 41 will be described later.

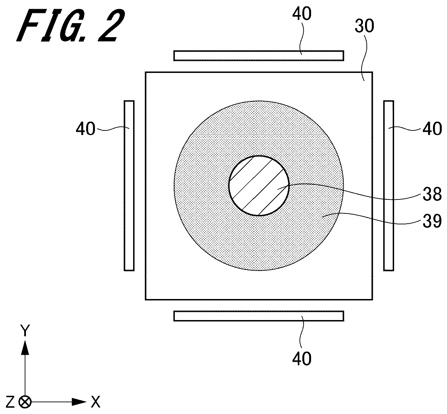

FIG. 2 is a plan view illustrating the position of the detection unit 40.

As illustrated in FIG. 2, the plurality of detection units 40 are arranged so as to surround the periphery of the product 38. Here, there is a presintered area 39 where the powder material 32 is presintered around the product 38. The plurality of detection units 40 are arranged so as to surround the periphery of the product 38 and the presintered area 39 with the electron shield 30 interposed therebetween. By arranging the plurality of detection units 40 near the product 38 on the side of the product 38 as described above, the state of the product 38 can be detected more accurately. The plurality of detection units 40 then detect backscattered electrons generated when the product 38 and the presintered area 39 are irradiated with the electron beam 15.

The example in which the plurality of detection units 40 are arranged has been described, but it is not limited thereto, and the number of detection units 40 may be one, or three or less, or five or more.

The detection unit 40 is not limited to a semiconductor detector or the like, and may be a Ti electrode or the like having a small secondary electron emission rate due to electron excitation. As the detection unit 40, backscattered electrons incident on an electrode may be detected as a current by a current detection amplifier, and the increase or decrease thereof may be detected.

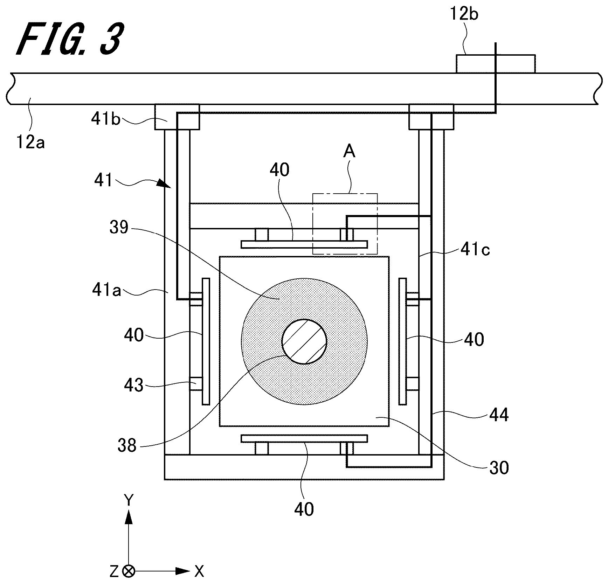

FIG. 3 is a plan view illustrating the detection unit 40 and the support bracket 41.

As illustrated in FIG. 3, the support bracket 41 includes a support frame 41a and a fixing portion 41b. The support frame 41a has a substantially rectangular opening 41c. The product 38, the presintered area 39, and the electron shield 30 are arranged in the opening 41c of the support frame 41a. That is, the support frame 41a is disposed so as to surround the periphery of the electron shield 30.

The fixing portion 41b is provided at one end portion of the support frame 41a in the Y direction, that is, on the back surface portion 12a side of the vacuum chamber 12. The fixing portion 41b is fixed to a back surface portion 12a of the vacuum chamber 12. In the support frame 41a and the fixing portion 41b of the support bracket 41, a signal line 44 connected to the detection unit 40 is disposed. The signal line 44 is disposed in the support bracket 41, and is connected from the fixing portion 41b to a connecting portion 12b provided outside the back surface portion 12a of the vacuum chamber 12. As a result, a backscattered electron signal detected by the detection unit 40 is transmitted to a control unit disposed outside the vacuum chamber 12 via the connecting portion 12b.

The support frame 41a is configured to be dividable into a plurality of members. In particular, the member disposed on the front side of the vacuum chamber 12 in the support frame 41a can be divided from other members. Therefore, when the product 38 is taken out from the vacuum chamber 12, the support frame 41a can be prevented from interfering with the product 38. As a result, the product 38 can be easily taken out from the vacuum chamber 12.

The detection unit 40 is fixed inside the opening 41c of the support frame 41a via an insulator 43. The detection surface of the detection unit 40 thus faces the product 38 and the presintered area 39 in the horizontal direction. Since the insulator 43 is provided between the detection unit 40 and the support frame 41a, the detection unit 40 electrically insulates the support frame 41a. That is, the detection unit 40 is fixed to the support frame 41a while floating from GND. Details of the fixed state between the detection unit 40 and the support bracket 41 will be described later.

Here, in a case where the support bracket 41 is fixed to the electron shield 30 or the radiation shield cover 28 having a smaller heat capacity than the vacuum chamber 12, heat is transferred from the electron shield 30 or the radiation shield cover 28 to the support bracket 41. For this reason, the temperatures of the support bracket 41 and the detection unit 40 become high. On the other hand, by fixing the support bracket 41 supporting the detection unit 40 to the vacuum chamber 12, the heat transferred to the detection unit 40 and the support bracket 41 is transferred to the vacuum chamber 12. As a result, it is possible to prevent the temperatures of the detection unit 40 and the support bracket 41 from becoming high.

In the present example, the example in which the support bracket 41 is fixed to the vacuum chamber 12 has been described, but it is not limited thereto. The support bracket 41 may be fixed to a member separated from the heat source, in addition to the vacuum chamber 12. Therefore, the support bracket 41 may be fixed to the end portion of the build table 18.

Next, details of a mechanism for elevating the electron shield 30 and a detection operation of the detection unit 40 will be described with reference to FIGS. 4 to 5C.

FIG. 4 is a front view illustrating the electron shield 30 and the elevating mechanism 50.

As illustrated in FIG. 4, an elevating member 51 is disposed on the back surface side of the vacuum chamber 12. The elevating member 51 is supported by the vacuum chamber 12 to be movable in the Z direction. The elevating member 51 is formed of a substantially flat plate-like member.

An inclined surface 51a and a horizontal surface 51b are formed at the lower end portion of the elevating member 51 in the Z direction. The inclined surface 51a is formed at both end portions in the X direction of the elevating member 51. The horizontal surface 51b is formed between the two inclined surfaces 51a. The inclined surface 51a is continuously inclined in the Z direction from the horizontal surface 51b toward the outside in the X direction. The horizontal surface 51b is formed in parallel with the X direction. The horizontal surface 51b is set to be lower in height in the Z direction than the inclined surface 51a.

The electron shield 30 is fixed to the elevating member 51 via a fixing bracket 54. The electron shield 30 is raised and lowered in the Z direction together with the elevating member 51.

A cam follower 52 is provided at the upper end portion of the recoater 16c in the Z direction. The cam follower 52 is provided at one end portion in the Y direction of the recoater 16c, that is, on the back surface side of the vacuum chamber 12. When the recoater 16c moves in the X direction, the cam follower 52 comes into contact with the inclined surface 51a and the horizontal surface 51b of the elevating member 51. The cam follower 52 and the elevating member 51 constitute the elevating mechanism 50 that raises and lowers the electron shield 30.

In a state where the electron shield 30 is lowered, the space between the detection unit 40 and the build surface 32a is shielded by the electron shield 30. As a result, it is possible to prevent the scattered powder material 32 and the evaporated substance generated from the build surface 32a from adhering to the detection unit 40 and the insulator 43 supporting the detection unit 40. Furthermore, since the electron shield 30 can shield radiant heat generated from the build surface 32a, the detection unit 40 can be prevented from increasing in temperature due to the influence of the radiant heat. As a result, it is possible to prevent the occurrence of a problem that a backscattered electron signal cannot be appropriately acquired.

In addition, the electron shield 30 can prevent not only the detection unit 40 but also the insulator 43 from increasing in temperature due to the influence of the radiant heat. As a result, it is possible to prevent the resistance value of the insulator 43 from decreasing due to the high temperature of the insulator 43, and to prevent the conduction between the detection unit 40 and the support bracket 41.

Furthermore, the detection unit 40 is disposed outside the build surface 32a in the X direction and the Y direction as compared with the lower end portion in the Z direction of the radiation shield cover 28. Therefore, the influence of the radiant heat transmitted to the detection unit 40 can also be protected by the radiation shield cover 28.

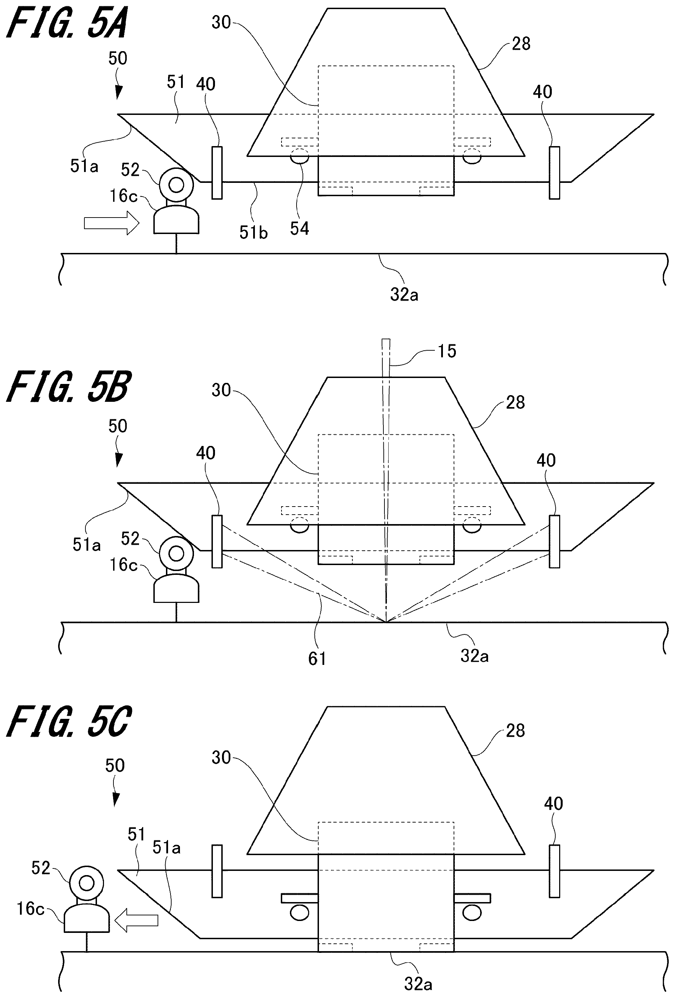

FIGS. 5A to 5C are explanatory diagrams illustrating the elevating operation of the electron shield 30 and the detection operation of the detection unit 40.

First, as illustrated in FIG. 5A, when the recoater 16c moves in the X direction and approaches the electron shield 30, the cam follower 52 provided in the recoater 16c comes into contact with the inclined surface 51a of the elevating member 51. The elevating member 51 is thus pushed upward in the Z direction by the cam follower 52. As a result, the electron shield 30 moves upward in the Z direction together with the elevating member 51, and the electron shield 30 is separated from the build surface 32a.

When the recoater 16c reaches the horizontal surface 51b of the elevating member 51, a space through which the recoater 16c can pass is formed between the electron shield 30 and the build surface 32a. As a result, the recoater 16c can be moved along the X direction without interference between the recoater 16c and the electron shield 30.

Furthermore, in a case where backscattered electrons 61 are detected by the detection unit 40, it is only required that there is a gap through which the backscattered electrons 61 can pass between the electron shield 30 and the build surface 32a. For this reason, as illustrated in FIG. 5B, in a case where the backscattered electrons 61 are detected by the detection unit 40, the recoater 16c may be stopped before reaching the horizontal surface 51b of the elevating member 51. As a result, the time required for raising and lowering the electron shield 30 can be shortened.

As illustrated in FIG. 5B, when the recoater 16c is moved by a predetermined distance and a gap through which the backscattered electrons 61 can pass is formed between the electron shield 30 and the build surface 32a, that is, when the detection unit 40 is disposed at a position where the build surface 32a is viewed, the beam irradiation device 14 is controlled to irradiate the build surface 32a with the electron beam 15. At this time, the beam irradiation device 14 operates on the basis of a control command from the control unit, thereby scanning the presintered area 39 in the build surface 32a and the build surface 32a of the product 38 with the electron beam 15. In this case, the beam irradiation device 14 reduces the electron beam current of the electron beam 15 as much as possible, and irradiates the build surface 32a in focus. The detection unit 40 then detects the backscattered electrons 61 generated by the electron beam 15.

When the operation of detecting the backscattered electrons 61 by the detection unit 40 is completed, the recoater 16c moves in the X direction and returns to the initial position as illustrated in FIG. 5C. By the recoater 16c returning to the initial position, the cam follower 52 is separated from the inclined surface 51a of the elevating member 51. As a result, as illustrated in FIG. 5C, the elevating member 51 and the electron shield 30 are lowered along the Z direction. The periphery of the build surface 32a is surrounded by the electron shield 30. The space between the detection unit 40 and the build surface 32a is thus shielded again by the electron shield 30. As a result, it is possible to prevent the scattered powder material 32 and the evaporated substance generated from the build surface 32a from adhering to the detection unit 40 and the insulator 43, and to prevent the detection unit 40 from increasing in temperature due to the influence of the radiant heat. In the above description, the recoater 16c returns to the initial position (FIG. 5C), but the recoater 16c may stop at the timing when the electron shield 30 is brought into contact with the build surface 32a except for a case where powder is supplied from the hopper 16a. As a result, the operating time can be shortened.

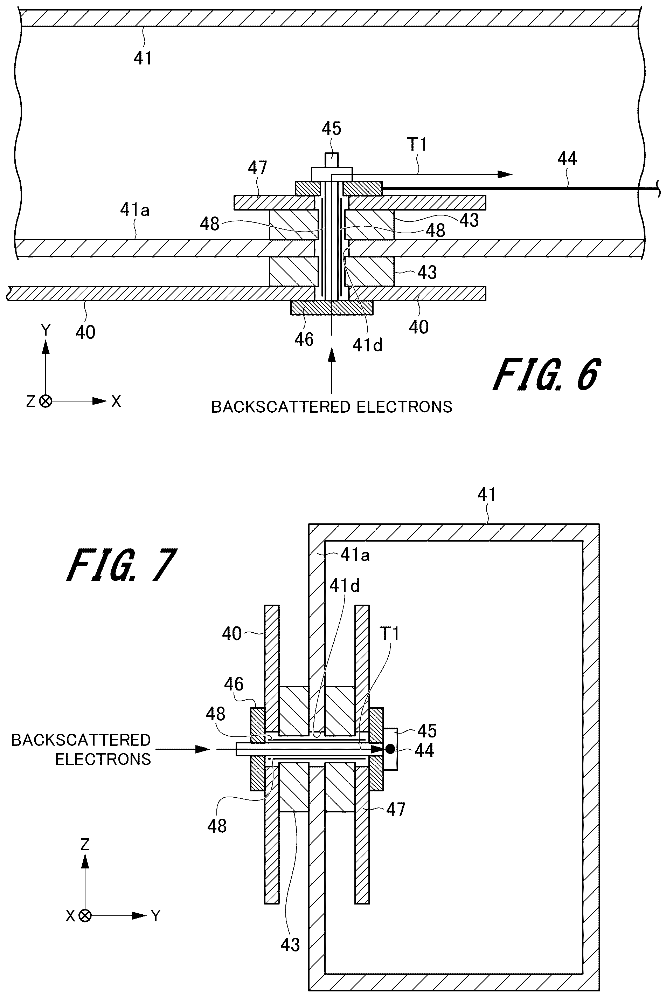

Next, details of the fixed state between the detection unit 40 and the support bracket 41 will be described with reference to FIGS. 6 and 7.

FIG. 6 is an enlarged explanatory diagram illustrating the area A illustrated in FIG. 3, and FIG. 7 is a cross-sectional view of FIG. 6 taken along a vertical direction.

As illustrated in FIGS. 6 and 7, the support frame 41a is formed of a hollow member. An insertion hole 41d is formed in a surface of the support frame 41a to which the detection unit 40 is attached.

The shaft portion of a fixing screw 45 is inserted into the insertion hole 41d. The head portion of the fixing screw 45 is disposed in the support frame 41a. A first fixing plate 46 is provided at one end portion of the shaft portion of the fixing screw 45, and a second fixing plate 47 is provided at the other end portion, that is, on the head portion side of the shaft portion of the fixing screw 45.

The detection unit 40 is fixed to the first fixing plate 46. The detection unit 40 is sandwiched between the first fixing plate 46 and the insulator 43. The insulator 43 is interposed between the detection unit 40 and the support frame 41a. The signal line 44 is connected to the fixing screw 45. Therefore, a backscattered electron signal T1 detected by the detection unit 40 passes through the fixing screw 45 and is transmitted to the signal line 44.

The insulator 43 is interposed between the second fixing plate 47 and the support frame 41a. It is thus possible to prevent the fixing screw 45 from coming into contact with the support frame 41a, and the fixing screw 45 and the support frame 41a from being conducted to each other. As a result, the detection unit 40 can be reliably electrically insulated from the support frame 41a.

As illustrated in FIGS. 6 and 7, the detection unit 40 is formed in a flat plate shape. The lengths in the X direction and the Z direction of the detection unit 40 are formed to be larger than the lengths in the X direction and the Z direction of the insulator 43. That is, the outer diameter of the build surface facing the build surface 32a in the detection unit 40 is set to be larger than the outer diameter of the insulator 43. The surface of the insulator 43 facing the build surface 32a is covered by the detection unit 40. In order for the scattered powder material 32 and the evaporated substance generated from the build surface to adhere to the insulator 43, the powder material 32 and the evaporated substance need to come around behind the detection unit 40.

As described above, it is possible to prevent the powder material 32 scattered to the insulator 43 and the evaporated substance generated from the build surface 32a from adhering to the insulator. As a result, the insulation of the insulator 43 can be maintained, and thus the detection unit 40 can be prevented from being conducted to the GND. Furthermore, it is possible to prevent the insulator 43 from increasing in temperature due to the adhered powder material 32 and the adhered evaporated substance and the resistance value of the insulator 43 from decreasing. As a result, it is possible to prevent the occurrence of a problem that a backscattered electron signal cannot be appropriately acquired.

An insulating member 48 is interposed between the shaft portion of the fixing screw 45, and the support frame 41a, the detection unit 40, the insulator 43, and the second fixing plate 47. The insulating member 48 is inserted into insertion hole 41d formed in the support frame 41a, and disposed so as to surround the periphery of the shaft portion of the fixing screw 45. Accordingly, it is possible to prevent the fixing screw 45 from coming into contact with the support frame 41a and being conducted.

### 1-2. Operation Example of Three-Dimensional PBF-AM Apparatus

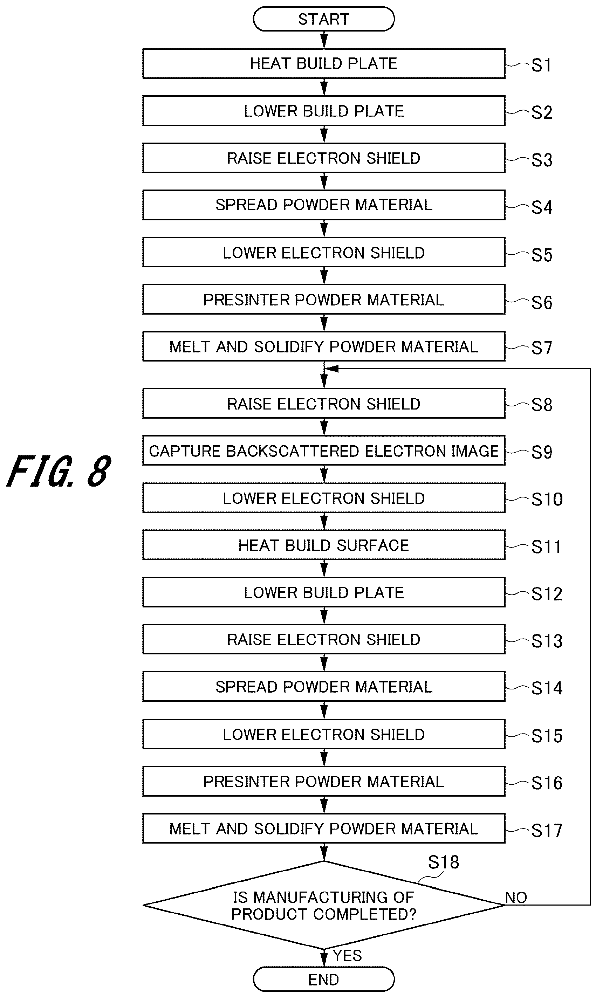

Next, an operation example of the three-dimensional PBF-AM apparatus 10 with the configuration described above will be described with reference to FIG. 8.

FIG. 8 is a flowchart illustrating an operation example of the three-dimensional PBF-AM apparatus 10.

As illustrated in FIG. 8, the beam irradiation device 14 operates on the basis of a control command given from the control unit to heat the build plate 22 (step S1). In step S1, the beam irradiation device 14 operates under the control of the control unit to irradiate the build plate 22 with the electron beam 15 through the opening 30a of the electron shield 30. At this time, the control unit defocuses the electron beam 15 by an objective lens or the like included in the beam irradiation device 14. Defocusing is performed in a manner that the in-focus position of the electron beam 15 is shifted downward from the upper surface of the build plate 22, that is, in an underfocused state.

In addition, the control unit controls the beam irradiation device 14 so as to scan the electron beam 15 over a wider range than the opening 30a of the electron shield 30. The build plate 22 is thus heated by irradiation with the electron beam 15. The build plate 22 is heated to a temperature at which the powder material 32 is presintered. After heating the build plate 22 to a predetermined temperature, the beam irradiation device 14 stops the irradiation with the electron beam 15. Scanning the electron beam 15 over a wider range than the opening 30a of the electron shield 30 means scanning the electron beam 15 over an area larger than the opening area of the opening 30a so that the opening 30a falls within the scanning range (scanning area) of the electron beam 15. The electron beam 15 may be scanned over an area narrower than the opening area of the opening 30a.

Next, the build plate 22 is lowered by a predetermined amount (step S2). In step S2, the plate moving device 26 lowers the inner base 24 by a predetermined amount so that the upper surface of the build plate 22 is slightly lower than the upper surface of the powder material 32 spread on the build table 18. At this time, the build plate 22 is lowered by the predetermined amount together with the inner base 24. The predetermined amount (hereinafter, also referred to as "ΔZ") described herein corresponds to the thickness of one layer when the product 38 is manufactured by stacking.

Next, the electron shield 30 is raised (step S3). In step S3, as illustrated in FIG. 5A, the recoater 16c is moved in the X direction, and the cam follower 52 is brought into contact with the inclined surface 51a of the elevating member 51. As a result, the elevating member 51 and the electron shield 30 rise along the Z direction.

Next, the powder material 32 is spread on the build plate 22 (step S4). In step S4, the powder supply device 16 drops the powder material 32 supplied from the hopper 16a to the powder dropping device 16b onto the build table 18 by the powder dropping device 16b. Thereafter, the powder supply device 16 moves the recoater 16c from one end side to the other end side in the X direction. As a result, the powder material 32 is spread on the inner base 24. At this time, the powder material 32 is spread on the build table 18 with a thickness corresponding to ΔZ. The excess powder material 32 is collected in the collecting box 21.

When the recoater 16c reaches the horizontal surface 51b of the elevating member 51, the electron shield 30 and the elevating member 51 rise to a height at which they do not come into contact with the recoater 16c. As a result, the powder material 32 can be spread smoothly.

Next, the electron shield 30 is lowered (step S5). In step S5, the recoater 16c is moved to a position where the cam follower 52 of the recoater 16c does not come into contact with the inclined surface 51a and the horizontal surface 51b of the elevating member 51. As a result, the electron shield 30 and the elevating member 51 are lowered to the upper surface of the build plate 22. At this time, the powder material 32 spread on the build plate 22 is exposed to the outside through the opening 30a of the electron shield 30. The powder material 32 around the build plate 22 is in a state of being covered by the shield portion 30b of the electron shield 30. The space between the powder material 32 and the detection unit 40 is shielded by the electron shield 30.

Next, the powder material 32 is presintered (step S6). In step S6, the beam irradiation device 14 operates under the control of the control unit to irradiate the powder material 32 on the build plate 22 with the electron beam 15 through the opening 30a of the electron shield 30. At this time, the control unit defocuses the electron beam 15 by an objective lens or the like included in the beam irradiation device 14. Defocusing is performed in a manner that the in-focus position of the electron beam 15 is shifted downward from the upper surface (build surface 32a) of the powder material 32, that is, in an underfocused state. In addition, the control unit controls the beam irradiation device 14 so as to scan the electron beam 15 over a wider range than the opening 30a of the electron shield 30. As a result, not only the powder material 32 exposed at the opening 30a but also the powder material 32 located outside the opening 30a (the powder material 32 shielded by the shield portion 30b) is presintered. The electron beam 15 may be scanned over an area narrower than the opening area of the opening 30a.

As described above, the step of covering the powder material 32 spread on the build plate 22 by the electron shield 30 having the opening 30a and irradiating the powder material 32 with the electron beam 15 through the opening 30a to presinter the powder material 32 corresponds to a first step.

In the first step, by scanning the electron beam 15 over a wider range than the opening 30a of the electron shield 30, it is possible to presinter at least all the powder material 32 exposed at the opening 30a. When the powder material 32 is presintered, the powder material 32 can have conductivity. Therefore, powder scattering in the sintering step performed after the presintering step can be suppressed.

Next, the powder material 32 is melted and solidified (step S7). In step S7, the powder material 32 as a presintered body is sintered by melting and solidifying the powder material 32 presintered as described above by irradiation with the electron beam 15. This step corresponds to a second step. In the second step, the beam irradiation device 14 scans the electron beam on the basis of two-dimensional data obtained by slicing three-dimensional Computer-Aided Design (CAD) data of the target product with a constant thickness, thereby selectively melting the powder material 32 on the build plate 22. The powder material 32 melted by the irradiation with the electron beam solidifies after the electron beam passes. As a result, building of a first layer is completed. The second step corresponds to a selective melting step since the powder material 32 spread on the build plate 22 is selectively melted and solidified by scanning of the electron beam 15.

Here, during the processes of steps S6 and S7, the detection unit 40 and the support bracket 41 are shielded by the electron shield 30. As a result, it is possible to prevent the scattered powder material 32 and the evaporated substance from adhering to the detection unit 40 and the insulator 43, and to prevent the detection unit 40 from increasing in temperature due to the influence of the radiant heat.

Next, the electron shield 30 is raised (step S8). In step S8, as illustrated in FIG. 5A, the recoater 16c is moved in the X direction, and the cam follower 52 is brought into contact with the inclined surface 51a of the elevating member 51. As a result, the elevating member 51 and the electron shield 30 rise along the Z direction. The height of rise of the electron shield 30 in step S8 may be lower than the height of rise of the electron shield 30 in step S3 described above.

Next, a backscattered electron image is acquired (step S9). In step S9, the beam irradiation device 14 first operates on the basis of a control command given from the control unit, thereby scanning the presintered area 39 where the presintered powder material 32 is present and the product 38 with the electron beam 15. In this case, the beam irradiation device 14 reduces the electron beam current of the electron beam 15 as much as possible, and irradiates the build surface 32a in focus. The detection unit 40 then detects the backscattered electrons 61 generated by the electron beam 15.

The detection unit 40 outputs the detected backscattered electron signal to the control unit. The image processing unit of the control unit then performs arithmetic processing on the backscattered electron signal (backscattered electron information) acquired from the detection unit 40 to acquire a backscattered electron image (BSE image). In addition, the processing unit stores the acquired BSE image in the storage unit.

Next, the electron shield 30 is lowered (step S10). In step S10, the recoater 16c is moved to a position where the cam follower 52 of the recoater 16c does not come into contact with the inclined surface 51a and the horizontal surface 51b of the elevating member 51. As a result, the electron shield 30 and the elevating member 51 are lowered to the upper surface of the build plate 22. As a result, the detection unit 40 and the support bracket 41 are shielded again by the electron shield 30.

Next, the build surface 32a is heated as a preparation for spreading the powder material 32 (step S11). In step S11, the beam irradiation device 14 operates under the control of the control unit to irradiate the build surface 32a with the electron beam 15 through the opening 30a of the electron shield 30. At this time, the control unit defocuses the electron beam 15 by an objective lens or the like included in the beam irradiation device 14. Defocusing is performed in a manner that the in-focus position of the electron beam 15 is shifted downward from the build surface 32a, that is, in an underfocused state.

In addition, the control unit controls the beam irradiation device 14 so as to scan the electron beam 15 over a wider range than the opening 30a of the electron shield 30. As a result, the entire area of the build surface 32a exposed at the opening 30a is irradiated with the electron beam 15. The build surface 32a is heated to a temperature at which the powder material 32 is presintered. After heating the build surface 32a to a predetermined temperature, the beam irradiation device 14 stops the irradiation with the electron beam 15.

Next, the build plate 22 is lowered by the predetermined amount (ΔZ) (step S12). In step S12, the plate moving device 26 lowers the inner base 24 by ΔZ so that the build surface 32a is slightly lower than the upper surface of the powder material 32 spread on the build table 18.

Next, the electron shield 30 is raised (step S13). In step S13, as illustrated in FIG. 5A, the recoater 16c is moved in the X direction, and the cam follower 52 is brought into contact with the inclined surface 51a of the elevating member 51. As a result, the elevating member 51 and the electron shield 30 rise along the Z direction.

Next, the powder material 32 is spread on the build plate 22 (step S14). In step S14, the powder supply device 16 operates similarly to step S4 described above.

Next, the electron shield 30 is lowered (step S15). In step S15, the recoater 16c operates similarly to step S5 described above.

Next, the powder material 32 is presintered (step S16). This step corresponds to the first step. In step S16, the beam irradiation device 14 operates similarly to step S6 described above. Next, the powder material 32 is melted and solidified (step S17). This step corresponds to the second step. In step S17, the beam irradiation device 14 operates similarly to step S7 described above. As a result, building of the second layer is completed.

Thereafter, the steps of steps S8 to S17 are repeated until manufacturing of the product 38 is completed in step S18. Manufacturing of the product 38 is completed when the powder material 32 is melted and solidified by the number of layers necessary for manufacturing the product 38. As a result, the target product 38 is obtained.

In the operation example described above, the operation of acquiring the BSE image is performed after the sintering step in step S7, but the timing of performing the operation of acquiring the BSE image is not limited thereto. For example, the operation of acquiring the BSE image may be performed after the process of step S11. In the operation of acquiring the BES image, the operation of raising the electron shield 30 is performed as indicated by the processes of steps S8 and S13.

Furthermore, the elevating operation of the electron shield 30 is performed when the detection unit 40 detects backscattered electrons. Therefore, the elevating operation of the electron shield 30 is not limited to the example illustrated in FIG. 8 described above, and the electron shield 30 may be raised and the backscattered electrons may be detected by the detection unit 40 also at the time of the step of melting the powder material 32. The elevating operation of the electron shield 30 and the detection operation by the detection unit 40 are appropriately set based on a request of a user who uses the three-dimensional PBF-AM apparatus 10.

The amount of rise of the electron shield 30 in step S8 may be less than the amount of rise of the electron shield 30 in step S3. That is, in the process of step S8, the electron shield 30 is raised by a gap that allows the backscattered electrons 61 to pass between the electron shield 30 and the build surface 32a. As a result, the time required for raising and lowering the electron shield 30 can be shortened.

In the present example, the example in which the cam follower 52 is provided in the recoater 16c, and the elevating operation of the electron shield 30 and the moving operation of the recoater 16c are linked has been described as the elevating mechanism 50, but it is not limited thereto. The elevating mechanism 50 that raises and lowers the electron shield 30 may be provided separately from the moving mechanism that moves the recoater 16c, and the elevating operation of the electron shield 30 and the moving operation of the recoater 16c may be independent from each other.

### 2. Second Embodiment Example

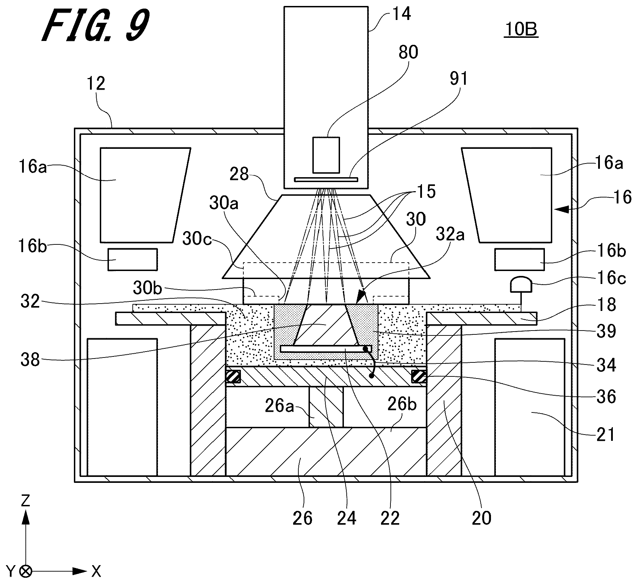

Next, a three-dimensional PBF-AM apparatus according to a second embodiment example will be described with reference to FIGS. 9 to 11.

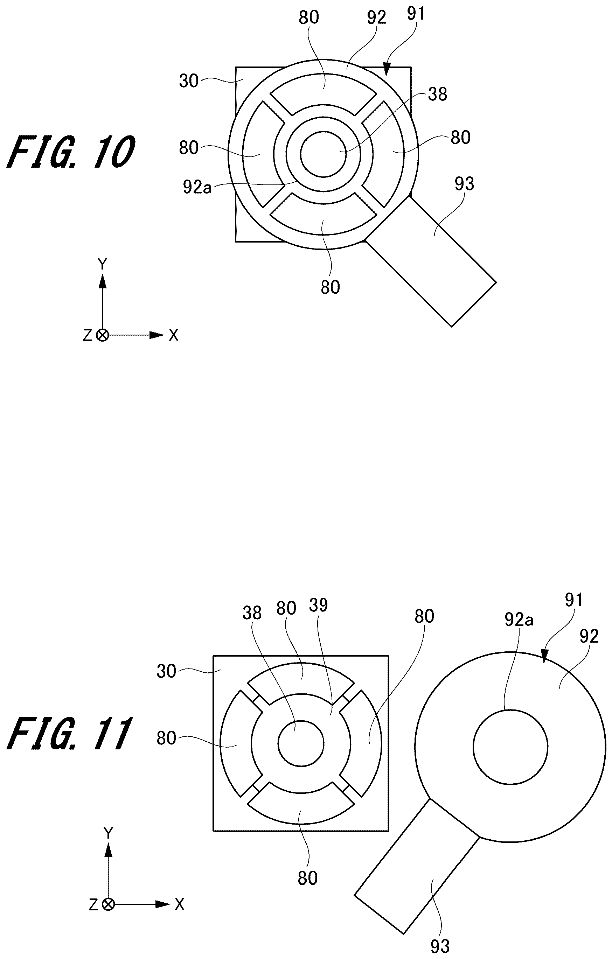

FIG. 9 is a schematic configuration diagram illustrating the three-dimensional PBF-AM apparatus according to the second embodiment example. FIGS. 10 and 11 are plan views illustrating a detection unit and a shielding member according to the second embodiment example.

A three-dimensional PBF-AM apparatus 10B according to the second embodiment example is different from the three-dimensional PBF-AM apparatus 10 according to the first embodiment example in the configuration of the detection unit and the shielding member. Therefore, here, the same reference numerals are given to portions common to those of the three-dimensional PBF-AM apparatus according to the first embodiment example, and redundant description will be omitted.

As illustrated in FIG. 9, the three-dimensional PBF-AM apparatus 10B includes a plurality of detection units 80 and a shutter mechanism 91 indicating a shielding member. The detection unit 80 is disposed in the beam irradiation device 14 above the radiation shield cover 28 in the Z direction. The detection unit 80 faces the build plate 22 and the build surface 32a of the product 38. The shutter mechanism 91 is disposed below the detection unit 80 in the Z direction.

As illustrated in FIGS. 10 and 11, the plurality of detection units 80 are arranged around the optical axis of the electron beam 15 irradiated from the beam irradiation device 14 in the X direction and the Y direction. An opening through which the electron beam 15 passes is formed at the center of the plurality of detection units 80.

The shutter mechanism 91 includes a shielding portion 92 that shields the detection surfaces of the plurality of detection units 80, and an operating portion 93. The shielding portion 92 is formed in a substantially circular flat plate shape. An opening 92a through which the electron beam 15 passes is formed at the radial center of the shielding portion 92. The shielding portion 92 prevents the scattered powder material 32 and the evaporated substance generated from the build surface 32a from adhering to the detection unit 80.

The shielding portion 92 shields radiant heat generated from the build surface 32a. As a result, it is possible to prevent the detection unit 80 from increasing in temperature due to the influence of the radiant heat.

The operating portion 93 is provided on the outer edge portion of the shielding portion 92. A movable mechanism (not illustrated) is connected to the operating portion 93. By operating the operating portion 93 with the movable mechanism, the shielding portion 92 is moved from a shielding state where the detection unit 80 illustrated in FIG. 10 is shielded to an open state where the detection unit 80 illustrated in FIG. 11 is opened. As illustrated in FIG. 11, by the shielding portion 92 separated from the detection unit 80, the detection surface of the detection unit 80 faces the product 38 and the presintered area 39. As a result, the detection unit 80 detects backscattered electrons generated by irradiating the build surface 32a with the electron beam 15.

The arrangement example of the plurality of detection units 80 is not limited to the example illustrated in FIG. 10, and various other arrangement examples may be applied. The shape of the shielding portion 92 is appropriately set based on the arrangement example of the plurality of detection units 80.

Since other configurations are similar to those of the three-dimensional PBF-AM apparatus 10 according to the first embodiment example described above, the description thereof will be omitted. The three-dimensional PBF-AM apparatus 10B with such a configuration can also obtain operations and effects similar to those of the three-dimensional PBF-AM apparatus according to the first embodiment example described above.

The present invention is not limited to the embodiments described above and illustrated in the drawings, and various modifications can be made without departing from the scope of the invention described in the claims.

For example, the above embodiment examples have described an example in which the metal powder such as titanium, aluminum, or iron is applied as a powder material, but the present invention is not limited to this, and a resin or the like is used as the powder material. In addition, the example in which the beam irradiation device that irradiates electron beams is applied as the irradiation device has been described, but it is not limited thereto. A laser irradiation device that irradiates a laser as a primary ray may be applied as the irradiation device.

In addition, some or all of the components, functions, processing units, and the like, which have been described above, may be implemented with hardware, for example, by designing with an integrated circuit. Further, the components, functions, and the like, which have been described above, may be implemented with software by a processor interpreting and executing a program for executing each function. Information such as a program, a table, and a file for implementing each function can be stored in a recording device such as a memory, a hard disk, and a solid state drive (SSD), or a recording medium such as an IC card, an SD card, and a DVD.

Although words such as "parallel" and "orthogonal" have been used in the present specification, these words do not mean only strict "parallel" and "orthogonal", but include states of "substantially parallel" and "substantially orthogonal" that include "parallel" and "orthogonal", and fall within a range in which functions can be achieved.

### Reference Signs List

- 10, 10B: Three-dimensional PBF-AM apparatus
- 12: Vacuum chamber
- 12a: Back surface portion
- 12b: Connecting portion
- 14: Beam irradiation device (Irradiation device)
- 15: Electron beam (Primary ray)
- 16: Powder supply device
- 16c: Recoater
- 16d: Blade
- 18: Build table
- 20: Build box
- 21: Collecting box
- 22: Build plate
- 24: Inner base
- 26: Plate moving device
- 28: Radiation shield cover
- 30: Electron shield (Shielding member)
- 30c: Enclosure portion
- 32: Powder material
- 32a: Build surface
- 38: Product
- 39: Presintered area
- 40, 80: Detection unit
- 41: Support bracket
- 41a: Support frame
- 41b: Fixing portion
- 41c: Opening
- 41d: Insertion hole
- 43: Insulator
- 44: Signal line
- 45: Fixing screw
- 46: First fixing plate
- 47: Second fixing plate
- 50: Elevating mechanism
- 51: Elevating member
- 51a: Inclined surface
- 51b: Horizontal surface
- 52: Cam follower
- 54: Fixing bracket
- 61: Backscattered electron
- 80: Detection unit
- 91: Shutter mechanism (Shielding member)
- 92: Shielding portion
- 92a: Opening
- 93: Operating portion
- T1: Backscattered electron signal

## Claims

1. A three-dimensional powder bed fusion additive manufacturing, PBF-AM, apparatus (10, 10B) comprising:
a build plate (22);
a powder supply device (16) configured to supply a powder material (32) to the build plate (22) to form a powder layer;
an irradiation device (14) configured to irradiate the powder layer with a primary ray (15);
a detection unit (40, 80) configured to detect backscattered electrons (61) generated when the powder material (32) is irradiated with the primary ray (15); and
a shielding member (30, 91) configured to openably and closably cover a detection surface of the detection unit (40, 80).

2. The three-dimensional PBF-AM apparatus (10, 10B) according to claim 1, further comprising:
a support bracket (41) configured to support the detection unit (40, 80);
a build table (18) on which the build plate (22) is disposed; and
a vacuum chamber (12) configured to house the build plate (22), the build table (18), the powder supply device (16), the detection unit (40, 80), the shielding member (30, 91), and the support bracket (41), wherein
the support bracket (41) is fixed to the vacuum chamber (12) or the build table (18).

3. The three-dimensional PBF-AM apparatus (10, 10B) according to claim 2, wherein
an insulator (43) is interposed between the support bracket (41) and the detection unit (40, 80).

4. The three-dimensional PBF-AM apparatus (10, 10B) according to any one of claims 1 to 3, wherein
a plurality of the detection units (40, 80) are arranged so as to surround a periphery of a product (38) formed on the build plate (22), and
the shielding member (30, 91) includes an enclosure portion (30c) that surrounds the periphery of the product (38) formed on the build plate (22), and is disposed between the detection unit (40, 80) and the product (38).

5. The three-dimensional PBF-AM apparatus (10, 10B) according to claim 4, wherein
the shielding member (30, 91) includes at least an opening (30a) and a shield portion (30b), exposes the powder material (32) spread on the build plate (22) through the opening (30a), and shields the powder material (32) located outside the opening (30a) by the shield portion (30b).

6. The three-dimensional PBF-AM apparatus (10, 10B) according to claim 5, wherein
the powder supply device (16) includes a recoater (16c) configured to spread the powder material (32) on the build plate (22) by moving in a direction parallel to one surface of the build plate (22), and
the detection unit (40, 80) is disposed above the recoater (16c) in a vertical direction.

7. The three-dimensional PBF-AM apparatus (10, 10B) according to any one of claims 4 to 6, further comprising
an elevating mechanism (50) configured to raise and lower the shielding member (30, 91) in a vertical direction.

8. The three-dimensional PBF-AM apparatus (10, 10B) according to claim 7, wherein
the powder supply device (16) includes a recoater (16c) configured to spread the powder material (32) on the build plate (22) by moving in a direction parallel to one surface of the build plate (22),
the elevating mechanism (50) includes a cam follower (52) provided on the recoater (16c), and
an elevating member (51) to which the shielding member (30, 91) is fixed and with which the cam follower (52) comes into contact, and
the elevating member (51) is pushed upward in a vertical direction together with the shielding member (30, 91) by coming into contact with the cam follower (52).

9. The three-dimensional PBF-AM apparatus (10, 10B) according to claim 1, further comprising a radiation shield cover (28) disposed between the build plate (22) and the irradiation device (14), configured to shield radiant heat, wherein
the powder supply device (16) includes a recoater (16c) configured to spread the powder material (32) on the build plate (22) by moving in a direction parallel to one surface of the build plate (22), and
the detection unit (40, 80) is disposed outside a lower end portion of the radiation shield cover (28) in a horizontal direction, at a position where a build surface (32a) is viewed, and above the recoater (16c) in a vertical direction.

10. The three-dimensional PBF-AM apparatus (10, 10B) according to claim 1, wherein
the detection unit (40, 80) is disposed above the build plate (22) in a vertical direction so as to face a product (38) formed on the build plate (22),
the shielding member (30, 91) includes a shielding portion (92) disposed between the detection unit (40, 80) and the build plate (22), and
the shielding portion (92) moves between a shielding state of shielding a detection surface of the detection unit (40, 80) and an opening state of opening the detection surface of the detection unit (40, 80).

11. The three-dimensional PBF-AM apparatus (10, 10B) according to claim 10, wherein
the shielding portion (92) includes an opening (92a) through which the primary ray (15) can pass.
